# EUROPEAN PATENT APPLICATION

(11) **EP 2 287 732 A1**
(43) Date of publication of application: **23.02.2011**
(21) Application number: 09168428.2
(22) Date of filing: 21.08.2009
(51) Int. Cl.: G06F 9/445

(54) **Method, apparatus and computer program for memory retention**

(71) Applicant: Telefonaktiebolaget L M Ericsson (Publ), 164 83 Stockholm (SE)
(72) Inventor: Carlsson, Anders, SE-222 40 Lund (SE); Olsson, Thomas, SE-374 37 Karlshamn (SE)
(74) Representative: Andersson, Björn E.

(57) **Abstract**

A method for memory retention during sleep-mode of a processor of an apparatus having processor and memory capabilities is disclosed. At entry of the sleep-mode, the method comprises determining system state; selecting a sub-set of the system state for memory retention; applying a compression algorithm on at least the sub-set to form a compressed sub-set, which compression algorithm preserves a virtual address space of the sub-set; and storing the compressed sub-set in a physical memory set to be retained during the sleep-mode. At return from the sleep-mode, the method comprises applying a decompression algorithm to the compressed sub-set, which decompression algorithm restores the virtual address space such that the sub-set comprising the system state is restored; and resuming operation. An apparatus and a computer program according to similar approach are also disclosed.

## Description

### Technical field

The present invention relates to a method for memory retention during sleep-mode of a processor. The present invention further relates to an apparatus having processor and memory capabilities, and arranged to provide memory retention in sleep-mode. The present invention further relates to a computer program for implementing the memory retention.

### Background

Energy issues in apparatuses having processing capabilities are dealt with for several reasons. For battery operated apparatuses there is a particular reason for saving energy. Sleep-mode is a widely used term for a state where power is saved when processing is not needed. Depending on the approach of the sleep-mode, the procedure of entering and leaving the sleep-mode has different grades of complexity. For example, in personal computers, time for entering sleep-mode and re-entering operation mode does not substantially differ from the time needed to shut down the computer completely and starting it again. Thus, such an approach is not suitable for saving power during shorter breaks in processing. Another example, used for example in embedded systems, is where the processor is powered down while the memories are kept powered. If the memories for example use CMOS technology, the static energy consumption, i.e. consumption for only holding the memories without reading or writing, is non-negligible due to leaky transistors.

It is therefore a need to provide an approach for entering sleep-mode, being in sleep mode, and returning to operation mode in a way that can be applied also during shorter breaks in processing and is sufficiently fast and power efficient to be used under such conditions.

### Summary

The present invention is inclined to alleviate or at least reduce the above elucidated drawbacks to provide an approach for entering sleep-mode, being in sleep mode, and returning to operation mode which saves energy.

The present invention is based on the understanding that some system states represented by memory content need to be preserved, while others can be lost without adverse effect on capabilities and performance. The inventors have further found that by compressing such parts of memory content that need to be preserved in a way that during decompression those memory parts are restored in their original allocated memories. Thus, only a limited memory is needed for retaining the information on the system states needed to be retained, thus only a limited physical memory is kept powered for holding the information, wherein a limited number of leaky transistors consume the static energy, and energy is saved. The restoration of the system states will on the other hand still be fast and energy efficient enough to fulfil the task of providing entering of sleep-mode, being in sleep mode, and returning to operation mode such that energy as a whole is saved also during short breaks in processing.

According to a first aspect, there is provided a method for memory retention during sleep-mode of a processor of an apparatus having processor and memory capabilities. At entry of the sleep-mode, the method comprises determining system state; selecting a sub-set of the system state for memory retention; applying a compression algorithm on at least the sub-set to form a compressed sub-set, which compression algorithm preserves a virtual address space of the sub-set; and storing the compressed sub-set in a physical memory set to be retained during the sleep-mode. At return from the sleep-mode, the method comprises applying a decompression algorithm to the compressed sub-set, which decompression algorithm restores the virtual address space such that the sub-set comprising the system state is restored; and resuming operation.

The physical memory may be a volatile memory provided on a chip of the processor. In the sleep-mode, the method may further comprise powering the physical memory, while powering down the rest of the processor.

The physical memory may be a volatile memory. In the sleep-mode, the method may further comprise powering the physical memory set, while powering down the rest of the apparatus.

The method may further comprise, after the selecting a sub-set of the system state and before applying the compression algorithm, replacing memory content that is not part of the selected sub-set with monotone information before input to the compression algorithm such that the compression algorithm is enabled to be applied to the resulting memory content, wherein the virtual address space is inherently retained. The replacing of memory content may comprise, at an input to the compression algorithm, gating the input to the compression algorithm to provide the monotone information such that writing of the monotone information in the memory is not needed. Alternatively, the replacing of memory content may comprise writing the monotone information in the memory at parts where the memory content is not part of the selected sub-set.

The method may further comprise, at entry of sleep-mode, calling all software units of the apparatus to control their release of memory not to be restored after return from sleep-mode; determining a list of allocated memory blocks after the release of memory not to be restored after return from sleep-mode; determining a list of static memory locations for retention; and forming the sub-set of the system state for memory retention based on the list of allocated memory blocks and the list of static memory locations.

According to a second aspect, there is provided an apparatus having processor and memory capabilities, further comprising a physical memory set for retaining system state data during a sleep-mode such that, at return from the sleep-mode, operation of the apparatus is enabled to be resumed. At entry of the sleep-mode, the apparatus is arranged to determine system state; select a sub-set of the system state for memory retention; apply a compression algorithm on at least the sub-set to form a compressed sub-set which compression algorithm preserves a virtual address space of the sub-set; and store the compressed sub-set in the physical memory set to be retained during the sleep-mode and a virtual address space of the sub-set. At return from the sleep-mode, the apparatus is arranged to apply a decompression algorithm to the compressed sub-set, which decompression algorithm restores the virtual address space such that the sub-set comprising the system state is restored; and resume operation.

The physical memory may be a volatile memory provided on a chip of the processor. In the sleep-mode, the physical memory may be arranged to be powered, while the rest of the processor is powered down. The chip of the processor may comprise an on-chip memory comprising a first and a second part, wherein the first part is the physical memory and the second part is arranged to be powered down during sleep-mode. The allocation of the first and the second part may be arranged to be variable by a set of switches for controlling the amount of memory to be powered during sleep-mode such that this amount defines the first part. Alternatively, the allocation of the first and the second part may be arranged to be fixed by a set of power lanes for powering the first part of the memory such that this part powered by said power lanes defines the first part.

The physical memory may be a volatile memory arranged to be powered in the sleep-mode, while the rest of the apparatus is powered down.

The apparatus may be arranged to replace memory content that is not part of the selected sub-set with monotone information such that the compression algorithm is enabled to be applied to the resulting memory content, wherein the virtual address space is inherently retained, to perform the selection of the sub-set and the compression at entry of the sleep-mode. Alternatively, the replacement of memory content may be performed at an input to a compressor arranged to perform the compression algorithm, the replacement is performed by a switching arrangement at the input to the compressor to switch in the monotone information to the compressor instead of incoming memory content that is not part of the selected sub-set.

The apparatus may further be arranged to, at entry of sleep-mode, call all software units of the apparatus to control their release of memory not to be restored after return from sleep-mode; determine a list of allocated memory blocks after the release of memory not to be restored after return from sleep-mode; determine a list of static memory locations for retention; and form the sub-set of the system state for memory retention based on the list of allocated memory blocks and the list of static memory locations.

According to a third aspect, there is provided a computer program including program instructions which when executed by a processor cause the processor to perform the method according to the first aspect.

### Brief description of drawings

Fig. 1 is a flow chart schematically illustrating a method according to an embodiment.
Fig. 2 is a flow chart schematically illustrating a sub-process according to an embodiment.
Fig. 3 is a block diagram schematically illustrating an apparatus according to an embodiment.
Fig. 4 illustrates three states of memory.
Fig. 5 schematically indicates the reading of memory content, and provision of the read memory content to a compressor, i.e. left arrow, and re-writing of the compressed memory content into the retention part of the memory, which is indicated to be below the horizontal dashed line, i.e. right arrow.
Fig. 6 schematically indicates the reading of retained memory content, and provision of the read retained memory content to a decompressor, i.e. left arrow, and re-writing of the decompressed memory content into the memory for restoring such that operation mode can be entered.
Fig. 7 schematically indicates substitution of memory parts that is not to be retained according to an embodiment.
Fig. 8 illustrates a computer program which is stored on a computer readable medium.

### Detailed description

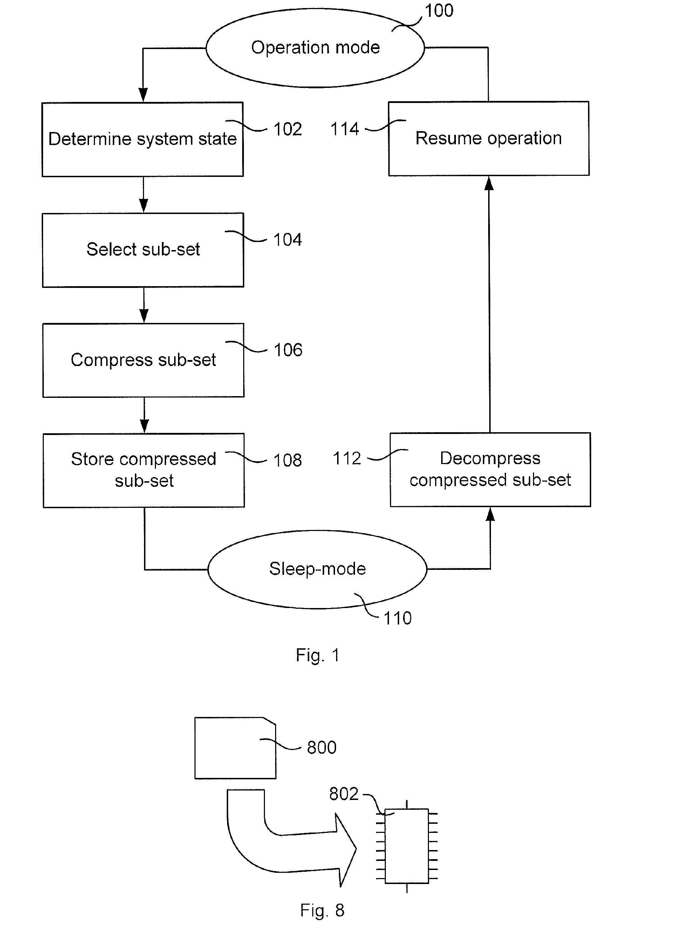

Fig. 1 is a flow chart schematically illustrating a method for memory retention during sleep-mode 110 of a processor of an apparatus having processor and memory capabilities, e.g. an embedded processor of a cellphone. Assuming that the processor is in an operation mode 100, the method comprises, at an entry of the sleep-mode, a system state determining step 102 where states of memory or memories are determined such that they can be restored when wakening from the sleep-mode 110. However, to enable swift shifting between operation mode 100 and sleep-mode 110, and vice versa, and especially be able to save power, which of course is the main purpose of the sleep-mode 110, the invention is based on the approach of saving a limited amount of data in a physical memory that is limited in size and can be kept, e.g. by powering of the limited size physical memory during the sleep-mode. Therefore, in a sub-set selecting step 104, a sub-set of the system state is selected for memory retention. This can be made by determining a map of memory addresses to be comprised in the sub-set, by setting a certain flag of such parts of the memory or memories, or by any other way of keeping track of the sub-set. Then, in a compression step 106, a compression algorithm is applied on at least the sub-set to form a compressed sub-set. The compression algorithm preserves a virtual address space of the sub-set. This can be achieved by also compressing other parts of the memory or memories, but with substitution of the content of those addresses by monotone information that is compressed to almost nothing. This can be made for example by substituting the content of those addresses by zero data and applying for example a Huffman-encoding or substituting the content of those addresses by a fixed bit-pattern and applying for example a run-length encoding. The advantage of these approaches is that the addressing will be automatically restored upon decompression. Alternatively, another mechanism for storing the size of the "empty" fields, i.e. those not part of the sub-set, can be applied to enable restoring of the addressing. In a storing step 108, the compressed sub-set is stored in the physical memory set to be retained during the sleep-mode. Here, by any of the tricks demonstrated above, also the addressing of the data retained by the sub-set is retained.

At return from the sleep-mode 110, in a decompression step 112, a decompression algorithm to the compressed sub-set, i.e. to the compressed at least sub-set. The decompression algorithm restores the virtual address space such that the sub-set comprising the system state is restored. This is performed mutatis mutandis to the approach of compressing the sub-set, wherein the addressing also is restored. The selected states are thus restored, while the non-selected states are gone and replaced by whatever monotone information the decompression algorithm provides, or any substitution to this information, e.g. zeros. Thereby, operation can be resumed in an operation resuming step 114, and the apparatus is back in the operation mode 100.

The transition from operation mode 100 to sleep-mode 110, or opposite transition, may only take a fraction of a second and with limited processing effort such that power can be saved although the apparatus or the processor of the apparatus only is able to be sleeping for a few seconds.

For example, the processor can be a dedicated processor handling certain functions of the apparatus, and while these functions are not called, the processor can enter the sleep-mode. The physical memory can be a volatile on-chip memory of the processor, wherein the physical memory is powered, while the rest of the processor is powered down. Thus, although the memory is comprised in the processor, the approach can be applied if the processor is suitably adapted therefore. The processor can of course also be a central processing unit of the apparatus. For example, the apparatus is powered down, such as can be the case in a receiver for a global navigation satellite system working in a power save mode where positions are determined only now and then, wherein the physical memory can be a volatile memory being powered in the sleep-mode, while powering down the rest of the apparatus, e.g. processor, display, receiver circuitry, etc. Thus, a significant amount of energy can be saved, although the apparatus is up and running almost instantly when the user needs it.

After the sub-set selecting step 104 and before the compression step 106, memory content that is not part of the selected sub-set can be replaced with monotone information before input to the compression algorithm such that the compression algorithm is enabled to be applied to the resulting memory content, wherein the virtual address space is inherently retained as exemplified above. The replacing of memory content can comprise gating the input to the compression algorithm. Thus writing of the monotone information in the memory is not needed. Alternatively, the replacing of memory content comprises writing the monotone information in the memory at parts where the memory content is not part of the selected sub-set.

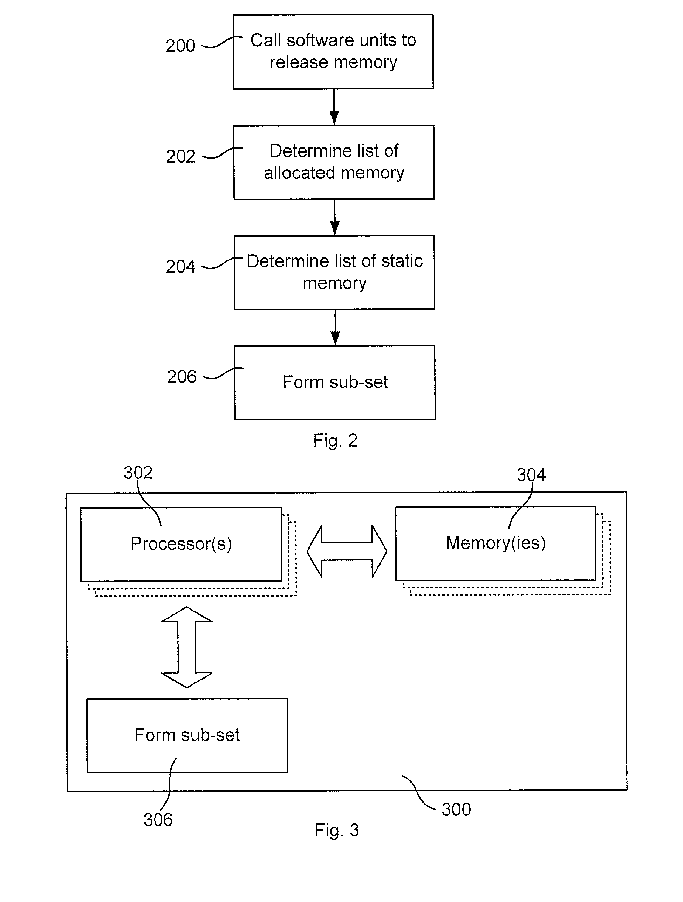

Selection of relevant states for retention can be made based on predefined rules, adaptive algorithms, or on analysis of system state at entry of the sleep-mode. One approach is a sub-process schematically illustrated by the flow chart of Fig. 2. In a software unit calling step 200, all software units of the apparatus are called to control their release of memory not to be restored after return from sleep-mode. Thus, the parts of the memory or memories that are not to be retained are no longer allocated. Thus, a list of allocated memory blocks can be determined in an allocated memory determination step 202. The result can of course be either a list of allocated memory to be restored when returning to operation mode, or a list of non- allocated memory after the release of memory which is not to be restored after return from sleep-mode, an therefore can be replaced, discarded, and/or compressed as demonstrated above. One approach is to determine a list of static memory locations for retention in a retention list determination step 204. From this, the sub-set of the system state for memory retention can be formed in a sub-set forming step 206. Thus, the sub-set is based on the list of allocated memory blocks and the list of static memory locations. This sub-process performs in principle equal functions as the system state determining step 102 and the sub-set selecting step 104 demonstrated with reference to Fig. 1.

Fig. 3 is a block diagram schematically illustrating an apparatus 300 comprising at least one processor 302 and at least one memory 304. The memory 304 can be integrated with the processor, or separate. Since the gist of the invention is about power savings, the strategy and degree of power savings are of course depending on the complexity of the apparatus in sense of processors and memories. In a one-chip solution having one processor with an on-chip memory only, the possibilities and variants are more restricted than in a solution with a number of dedicated processors operating different tasks. In the latter case, that particular processor can of course enter a sleep-mode when that particular task is not to be performed, while the other processors may still be operating. Thus, the invention can be seen to be working on the entire apparatus, as well as on one or more processors of the apparatus isolated. The thing is to enable quick and energy efficient transitions between operation mode and sleep-mode, and vice versa, for one or more processors depending on available structure and present situation.

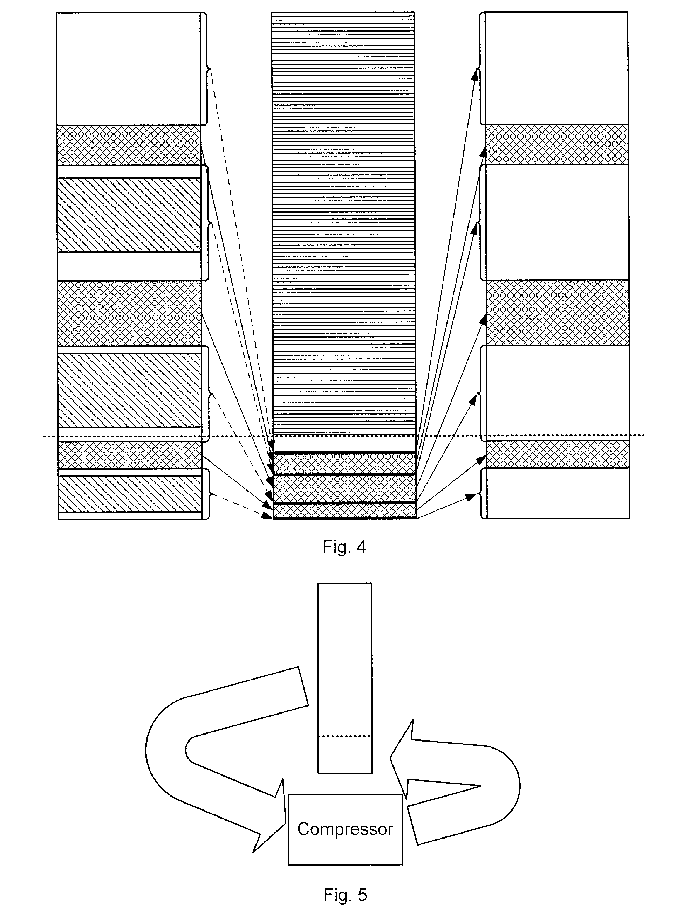

The apparatus 300 can be seen to have a sub-set forming mechanism 306 for forming a sub-set of system states which is compressed and retained at entry of sleep-mode to be decompressed and restored at return to operation mode. The sub-set forming mechanism 306 can in practice be a mix of software and hardware components. The hardware can comprise adapted memory access lines, compressor mechanism applying a compression algorithm, switching arrangements, etc. The software components can be memory access algorithms, compression algorithm performed in software by the processor, control procedures for closing other software components and having them release memory that is not to be retained, etc. Thus, some of the functions of the sub-set forming mechanism can be chosen to either be implemented in hardware or software as a design option. Implementing those functions in software can have the advantage of enabling the functions to be implemented in existing processing devices, and that silicon area can be saved. Implementing those functions in hardware may increase use of silicon area, but may be more power efficient and/or faster. The functions have been demonstrated above with reference to Figs 1 and 2, and will be further elucidated below with reference to Figs 4 to 6.

Fig. 4 illustrates three states of memory as a bar with addressing to be considered along the vertical direction. The horizontal dashed line across all the bars indicates that memory parts below this line are adapted for retention during sleep-mode as demonstrated above, while memory parts above this line are powered down during sleep-mode. The position of this line can be fixed or adaptive, as demonstrated above. The leftmost bar indicates memory state at entry of sleep mode with chequered fields indicating memory content to be retained, i.e. that need to be restored at return to operation mode, cross dashed fields indicating memory content that has been released and do not have to be retained, and blank fields indicating memory that is not used. The middle bar indicates the memory during sleep-mode with powered down memory parts horizontal dashed, the compressed memory content to be retained chequered, the lines between the chequered parts indicating the compressed monotone information or other indication for restoration of addressing, and the blank parts indicating memory that is not used. The rightmost bar indicates memory state at wake-up from sleep-mode where the restored memory parts, i.e. the decompressed sub-set, chequered, and blank parts indicating memory not yet used in the operation mode which now can be entered. For the sake of explanation, arrows between the bars indicate transformations of memory content, where the dashed lined indicates substitution or other operation for memory parts not to be retained.

Fig. 5 schematically indicates the reading of memory content and provision of the read memory content to a compressor, i.e. left arrow, and re-writing of the compressed memory content into the retention part of the memory, which is indicated to be below the horizontal dashed line, i.e. right arrow.

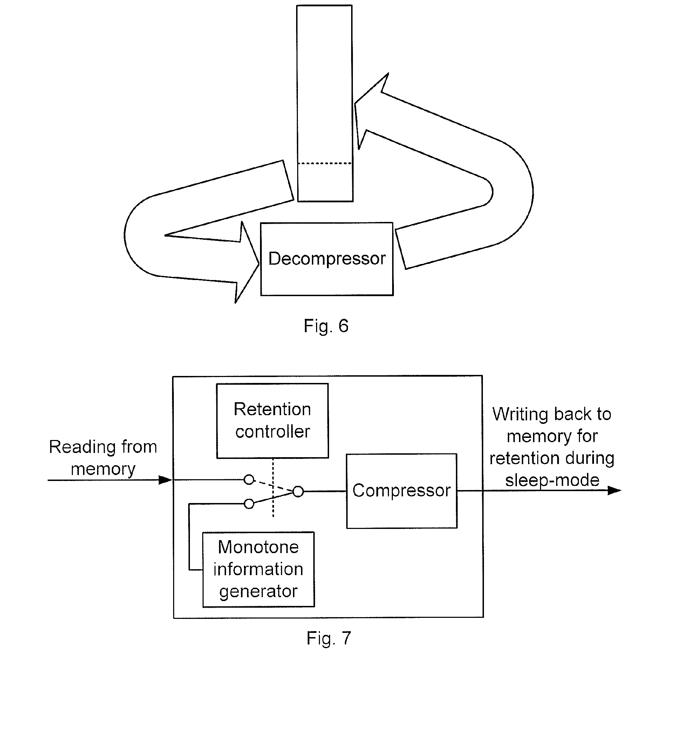

Fig. 6 schematically indicates the reading of retained memory content, and provision of the read retained memory content to a decompressor, i.e. left arrow, and re-writing of the decompressed memory content into the memory for restoring such that operation mode can be entered.

Thus, Fig. 4 and Figs 5 and 6 essentially are two different illustrations of the similar phenomenon.

Fig. 7 schematically indicates substitution of memory parts that is not to be retained according to an embodiment. Memory content that is read from the memory is provided to a switching mechanism which is controlled by a retention controller. If the memory content is to be retained, i.e. part of the sub-set, the switching mechanism is controlled to supply the reading from the memory to a compressor, which applies a compression algorithm and provides the compressed content for writing back to the retention part of the memory. Therefore, it is preferred that the memory is read from the end that is the part where the retained memory is to be stored such that re-writing can be done instantly. As the rewritten content is compressed, there is no risk that there will be any conflict between reading and writing. If the memory content is not to be retained, i.e. not part of the sub-set, the switching mechanism is controlled to supply monotone information from a monotone information generator to the compressor, which applies the compression algorithm and provides the compressed content for writing back to the retention part of the memory. As the monotone information is generated in such a way that the compressor can compress it heavily, i.e. the monotone information generator and the compressor are preferably matched, the compressed monotone information only takes a negligible space, but provides for correct restoration of addressing upon decompression.

The methods according to some of the embodiments are suitable for implementation with aid of processing means, such as the processor itself or other processor, e.g. in the case of the multi-processor arrangement demonstrated above, another processor can aid the processor going to sleep. Therefore, there is provided computer programs, comprising instructions arranged to cause the processing means or processor of the apparatus to perform the steps of any of the methods according to any of the embodiments described with reference to any of Figs. 1 and 2. The computer programs preferably comprise program code which is stored on a computer readable medium 800, as illustrated in Fig. 8, which can be loaded and executed by a processing means or processor 802 of the apparatus to cause it to perform the methods, respectively, according to embodiments of the present invention, preferably as any of the embodiments described with reference to any of Figs. 1 and 2. The processor 802 and computer program product 800 can be arranged to execute the program code sequentially where actions of the any of the methods are performed stepwise, but can also be arranged to perform the actions on a real-time basis, i.e. actions are performed upon request and/or available input data. The processing means or processor 802 is preferably what normally is referred to as an embedded system. Thus, the depicted computer readable medium 800 and processor 802 in Fig. 8 should be construed to be for illustrative purposes only to provide understanding of the principle, and not to be construed as any direct illustration of the elements.

## Claims

1. A method for memory retention during sleep-mode of a processor of an apparatus having processor and memory capabilities, the method comprising
at entry of the sleep-mode
determining system state;
selecting a sub-set of the system state for memory retention; applying a compression algorithm on at least the sub-set to form a compressed sub-set, which compression algorithm preserves a virtual address space of the sub-set; and
storing the compressed sub-set in a physical memory set to be retained during the sleep-mode,
and
at return from the sleep-mode
applying a decompression algorithm to the compressed sub-set, which decompression algorithm restores the virtual address space such that the sub-set comprising the system state is restored; and
resuming operation.

2. The method according to claim 1, wherein the physical memory is a volatile memory provided on a chip of the processor, the method, in the sleep-mode, further comprising powering the physical memory, while powering down the rest of the processor.

3. The method according to claim 1, wherein the physical memory is a volatile memory, the method, in the sleep-mode, further comprising, powering the physical memory set, while powering down the rest of the apparatus.

4. The method according to any of claims 1 to 3, further comprising, after the selecting a sub-set of the system state and before applying the compression algorithm, replacing memory content that is not part of the selected sub-set with monotone information before input to the compression algorithm such that the compression algorithm is enabled to be applied to the resulting memory content, wherein the virtual address space is inherently retained.

5. The method according to claim 4, wherein the replacing of memory content comprises, at an input to the compression algorithm, gating the input to the compression algorithm to provide the monotone information such that writing of the monotone information in the memory is not needed.

6. The method according to claim 4, wherein the replacing of memory content comprises writing the monotone information in the memory at parts where the memory content is not part of the selected sub-set.

7. The method according to any of claims 1 to 6, further comprising, at entry of sleep-mode,
calling all software units of the apparatus to control their release of memory not to be restored after return from sleep-mode;
determining a list of allocated memory blocks after the release of memory not to be restored after return from sleep-mode;
determining a list of static memory locations for retention; and
forming the sub-set of the system state for memory retention based on the list of allocated memory blocks and the list of static memory locations.

8. An apparatus having processor and memory capabilities, further comprising a physical memory set for retaining system state data during a sleep-mode such that, at return from the sleep-mode, operation of the apparatus is enabled to be resumed, wherein the apparatus is arranged to
at entry of the sleep-mode,
determine system state;
select a sub-set of the system state for memory retention;
apply a compression algorithm on at least the sub-set to form a compressed sub-set which compression algorithm preserves a virtual address space of the sub-set; and
store the compressed sub-set in the physical memory set to be retained during the sleep-mode and a virtual address space of the sub-set, and
at return from the sleep-mode,
apply a decompression algorithm to the compressed sub-set, which decompression algorithm restores the virtual address space such that the sub-set comprising the system state is restored; and
resume operation.

9. The apparatus according to claim 8, wherein the physical memory is a volatile memory provided on a chip of the processor, the physical memory, in the sleep-mode, is arranged to be powered, while the rest of the processor is powered down.

10. The apparatus according to claim 9, wherein the chip of the processor comprises an on-chip memory comprising a first and a second part, wherein the first part is the physical memory and the second part is arranged to be powered down during sleep-mode.

11. The apparatus according to claim 10, wherein the allocation of the first and the second part is arranged to be variable by a set of switches for controlling the amount of memory to be powered during sleep-mode such that this amount defines the first part.

12. The apparatus according to claim 10, wherein the allocation of the first and the second part is arranged to be fixed by a set of power lanes for powering the first part of the memory such that this part powered by said power lanes defines the first part.

13. The apparatus according to claim 8, wherein the physical memory is a volatile memory arranged to be powered in the sleep-mode, while the rest of the apparatus is powered down.

14. The apparatus according to any of claims 8 to 13, wherein the apparatus is arranged to replace memory content that is not part of the selected sub-set with monotone information such that the compression algorithm is enabled to be applied to the resulting memory content, wherein the virtual address space is inherently retained, to perform the selection of the sub-set and the compression at entry of the sleep-mode.

15. The apparatus according to claim 14, wherein the replacement of memory content is performed at an input to a compressor arranged to perform the compression algorithm, the replacement is performed by a switching arrangement at the input to the compressor to switch in the monotone information to the compressor instead of incoming memory content that is not part of the selected sub-set.

16. The apparatus according to any of claims 11 to 15, further being arranged to, at entry of sleep-mode,
call all software units of the apparatus to control their release of memory not to be restored after return from sleep-mode;
determine a list of allocated memory blocks after the release of memory not to be restored after return from sleep-mode;
determine a list of static memory locations for retention; and
form the sub-set of the system state for memory retention based on the list of allocated memory blocks and the list of static memory locations.

17. A computer program including program instructions which when executed by a processor cause the processor to perform the method according to any of claims 1 to 7.
